# EUROPÄISCHE PATENTANMELDUNG

(11) **EP 1 424 369 A1**
(43) Veröffentlichungstag der Anmeldung: **02.06.2004**
(21) Anmeldenummer: 03025334.8
(22) Anmeldetag: 04.11.2003
(51) Int. Cl.: C09B 67/00, C09D 5/36, C09K 19/00, B32B 27/20

(54) **Verbundgebilde mit einem Gehalt an Effekt-Pigmenten, Verfahren zu dessen Herstellung und dessen Verwendung**

(30) Priorität: 18.11.2002 DE 10253680
(71) Anmelder: Benecke-Kaliko Aktiengesellschaft, D-30419 Hannover (DE)
(72) Erfinder: Bühring, Jürgen, Dr., 73033 Göppingen (DE); Hülsewede, Volker, Dr., 73037 Göppingen (DE); Koch, Heino, 31061 Alfeld (DE); Mäker, Michael, 30169 Hannover (DE)
(74) Vertreter: Hagemann, Heinrich, Dr.rer.nat., Dipl.-Chem.

(57) **Zusammenfassung**

Beschrieben wird ein zwei- oder mehrlagiges Verbundgebilde, insbesondere in Form einer Verbundfolie, mit einem Gehalt an Effekt-Pigmenten in wenigstens einer Schicht. Dieses Verbundgebilde ist dadurch gekennzeichnet, dass das Verbundgebilde eine pigmentierte, thermoplastische Polymerschicht, die flüssigkristalline Effekt-Pigmente enthält, und darauf eine transparente, polymere UV-Schutzschicht aufweist, wobei die UV-Schutzschicht nach DIN EN ISO 11333 einen MFI-Wert (190°C, 2,16 kg) von weniger als 7g/min, das Verbundgebilde eine Lichtechtheit nach DIN 75 202 nach 5 Zyklen nach Stufe 3 oder höher und ein Fogging nach DIN 75 201 B von weniger als 1,0 mg und die einzelnen Schichten des Verbundgebildes eine Shore-Härte D nach DIN 53 505 von weniger als 45 aufweisen. Es lässt sich dadurch vorteilhaft herstellen, indem die einzelnen Schichten des Verbundgebildes in üblicher Weise extrudiert und/oder kalandriert und zu dem Verbundgebilde zusammengeführt oder durch Coextrusion erhalten werden. Besonders vorteilhafte Verwendung findet dieses Verbundgebilde zur Innenverkleidung von Kraftfahrzeugen, wo die dort gestellten Anforderungen optimal erfüllt werden.

## Beschreibung

Die Erfindung betrifft ein zwei- oder mehrlagiges Verbundgebilde, insbesondere eine Verbundfolie, mit einem Gehalt an Effekt-Pigmenten in mindestens einer der Schichten des Verbundgebildes, ein Verfahren zu dessen Herstellung sowie dessen Verwendung.

Der Einsatz von so genannten Effekt-Pigmenten ist im Stand der Technik bekannt. So genannte Flop-Effekt-Pigmente, wie beispielsweise Glimmer, erzeugen in der Beschichtung einen Erscheinungszustand, bei dem Licht von dem Pigment unterschiedlich reflektiert wird. Dies kann in Abhängigkeit vom Betrachtungswinkel zu einem veränderten Farbeffekt führen. Bei den meisten Effekt-Pigmenten dieses Typs ist der "Flop", d. h. das Übergehen des einen Zustandes in den anderen, nur eine Frage von wenigen Graden. Die ursprüngliche Farbe schlägt dann beispielsweise in eine andere oder helle oder dunkle Tönung um.

Es ist bekannt, dass der angesprochene Farb-Flop auch mit Flüssigkristallpigmenten erreicht werden kann. Hiermit befasst sich z. B. die DE 690 13 024 T2. Sie beschreibt deren Herstellung sowie deren Verwendung in Beschichtungsmitteln, wie in Lacken. Zwar sieht die DE 690 13 024 T2 auch vor, dass eine Flüssigkristall-Beschichtung durch Auftragen einer Deckschicht geschützt werden soll, vorzugsweise einer klaren Deckschicht, die einen UV-Absorber enthält und in üblicher Weise aufgetragen und vernetzt werden kann. Weitergehende Anforderungen werden nicht angegeben.

Der Begriff "Flüssigkristalle" bezeichnet eine große Zahl von Substanzen, die im flüssigen Zustand Eigenschaften haben, wie sie typischerweise bei kristallinen Feststoffen zu beobachten sind. Flüssigkristallpigmente enthalten orientierte, dreidimensional vernetzte Substanzen mit flüssigkristalliner Struktur mit chiraler Phase und sind auch aus der DE 42 40 743 bekannt. Flüssigkristalline Pigmente haben eine vom Betrachtungswinkel abhängige Farbigkeit und können in beliebigen Medien, wie beispielsweise Lacken, Bindemitteln oder Kunststoffen eingesetzt werden. Dies ist in der EP 0 686 674 ausführlich beschrieben. Ein breites Anwendungsfeld derartiger Pigmente betrifft die Lackierung von Gegenständen, beispielsweise Kraftfahrzeugen. Diese so genannten "cholesterischen" Flüssigkristallpigmente haben zunehmend an Bedeutung gewonnen. Dabei zeigt sich oft eine nicht hinlängliche Temperatur- und Lichtbeständigkeit. Der mangelnden Temperaturbeständigkeit versucht man durch eine Vernetzung der mesogenen Seitenkette zu begegnen. Diese Probleme sind wesentlicher Ausgangspunkt der nachfolgend geschilderten Erfindung, die sich eine diesbezügliche vorteilhafte Ausgestaltung des im Betreff bezeichneten Standes der Technik zum Ziel gesetzt hat.

Die DE 197 26 050 A1 betrifft Mischungen auf der Basis von Pigmenten, die orientierte, dreidimensional vernetzte Substanzen mit flüssigkristalliner Struktur mit chiraler Phase enthalten, sowie die Verwendung derartiger Mischungen. Pigment und Matrix sind derartig aufeinander abgestimmt, dass es bei Applikation der Mischung bei unterschiedlichen Temperaturen auf einem Substrat, wobei niedrigste Applikationstemperatur und höchste Applikationstemperatur um mindestens 10°C und um höchstens 150°C auseinander liegen, nicht zu visuell erkennbaren Farbdifferenzen der Pigmentfarbe nach dem Trocknen auf dem Substrat kommt. Diese technische Lehre betrifft insbesondere Lackierungen, Druckfarben, Kunststoffe und Pulverbeschichtungen, beispielsweise von metallischen und keramischen Substraten, sowie Holz und Kunststoffen, dies in Zusammenhang beispielsweise mit Verkehrsmitteln.

Die DE 38 81 046 befasst sich ebenfalls mit Flüssigkristallpigmenten. Diese werden jedoch zum Erzeugen einer thermochromen Beschichtung herangezogen. Geeignete Substrate zum Auftragen der thermochromen Pigmente sollen dabei Holz, Metall oder Kunststoff sein. Die herausgestellte thermochrome Effekt-Beschichtung weist eine wässrige Binderkomponente auf, die ein Flop-Pigment und verkapseltes thermochromes flüssigkristallines Pigment enthält. Die wässrige Binderkomponente enthält einen wässrigen Dispersionsbinder. Das Flop-Effektpigment kann in Form von Aluminium und/oder Glimmerpigmenten vorliegen. Das verkapselte Flüssigkristallpigment soll vorzugsweise ein mikroverkapseltes chirales nematisches Flüssigkristall sein.

Der Erfindung liegt die Aufgabe zugrunde, das eingangs bezeichnete zwei- oder mehrlagige Verbundgebilde, insbesondere in Form einer Verbundfolie so weiter zu bilden, dass die wünschenswerten Stabilitätswerte erzielt werden, insbesondere thermische Stabilität und Lichtstabilität erreicht werden, so dass sich damit die vorteilhafte Anwendung bei der Innenverkleidung von Fahrzeugen, insbesondere von Kraftfahrzeugen, erschließt. Darüber hinaus soll ein besonders vorteilhaftes Verfahren zur Herstellung eines derartigen Verbundgebildes angegeben werden.

Erfindungsgemäß wird diese Aufgabe dadurch gelöst, dass das Verbundgebilde eine pigmentierte thermoplastische Polymerschicht, die flüssigkristalline Effekt-Pigmente enthält, und darauf eine transparente, polymere UV-Schutzschicht aufweist, wobei die UV-Schutzschicht nach DIN EN ISO 11333 einen MFI-Wert (190°C, 2,16 kg) von weniger als 7g/min, das Verbundgebilde eine Lichtechtheit nach DIN 75 202 nach 5 Zyklen nach Stufe 3 oder höher und ein Fogging nach DIN 75 201 B von weniger als 1,0 mg und die einzelnen Schichten des Verbundgebildes eine Shore-Härte D nach DIN 53 505 von weniger als 45 aufweisen.

Erfindungsgemäß wird für das Verbundgebilde eine Lichtechtheit nach DIN 75 202 nach 5 Zyklen nach Stufe 3 oder höher gefordert. Bevorzugt ist es, dass diese mit Stufe 4 oder höher bewertet wird. Dabei impliziert die Lichtechtheit auch thermische Stabilität, was sich aus der DIN-Vorschrift ergibt. Das Fogging nach DIN 75 201 B des Verbundgebildes sollte weniger als 1,0 mg betragen, vorzugsweise weniger als 0,7 mg und insbesondere weniger als 0,5 mg. Hier wird eine allgemeine Anforderung im Bereich des Kraftfahrzeuginnenbereiches erfüllt. Ferner fordert die Erfindung, dass die Shore-Härte D der einzelnen Schichten nach DIN 53 505 kleiner als 45, vorzugsweise kleiner als 40 und insbesondere kleiner als 37 ist. Dies kann in der Regel nur solche Schichten bzw. Lagen des Verbundgebildes betreffen, bei denen grundsätzlich eine entsprechende Messgröße erfassbar ist. Dabei werden solche Schichten ausgeschlossen, die zusätzlich auf die erfindungsgemäße Verbundfolie aufgebracht bzw. eingebracht werden können, jedoch beispielsweise porös sind. Die angesprochene Shore-Härte-Bedingungen müssen eingehalten werden, um die Anforderung der Oberflächenweichheit bei der Anwendung des erfindungsgemäßen Verbundgebildes als Innenverkleidung von Fahrzeugen, insbesondere Kraftfahrzeugen, zu erzielen. Dies gilt auch für die bezeichnete Anforderung an das Fogging.

Erfindungsgemäß weist die transparente, polymere UV-Schicht nach DIN EN ISO 11 333 einen MFI-Wert (190°C, 2,16 kg) von weniger als 7 g/min, insbesondere von weniger als 5 g/min auf. Ganz besonders ist bevorzugt, wenn dieser MFI-Wert weniger als 1 g/min beträgt.

Im Rahmen der Erfindung werden flüssigkristalline Effekt-Pigmente eingesetzt, wie sie teilweise vorstehend im Zusammenhang mit dem Stand der Technik bereits beschrieben wurden. Hier unterliegt die Erfindung keiner wesentlichen Einschränkung. Würden die flüssigkristallinen Effekt-Pigmente lediglich in die pigmentierte, thermoplastische Polymerschicht eingebracht, dann würde die vorstehend bezeichnete Aufgabe nicht gelöst werden. Diese löst die vorliegende Erfindung in Kombination mit der speziell gestalteten, transparenten Polymeren UV-Schutzschicht mit den bezeichneten Anforderungen bezüglich Lichtechtheit und Fogging sowie Shore-Härte D der einzelnen Schichten.

Besonders vorteilhaft haben sich im Hinblick auf die wünschenswerten Farbeffekte, cholesterische flüssigkristalline Pigmente erwiesen. Zu diesen cholesterischen flüssigkristallinen Pigmenten ist noch folgendes auszuführen, wobei auch auf Flüssigkristalle als solche einzugehen ist:

Flüssigkristalle sind organische Verbindungen, deren Ordnungszustände zwischen dem einer kristallinen und dem einer flüssigen Phase liegt. Beim Schmelzen einer flüssigkristallinen Substanz geht ein Teil der Ordnung im Kristall verloren, aber die Moleküle sind noch nicht völlig frei beweglich wie in einer Flüssigkeit. Flüssigkristalle zeigen daher Eigenschaften beider Aggregatzustände, zum Beispiel die Doppelbrechung eines Kristalls und die Beweglichkeit einer Flüssigkeit.

Einfache Cholesterylester zeigen zum Beispiel einen "doppelten Schmelzpunkt" sowie die selektive, das heißt vom Betrachtungswinkel abhängige Reflexion von Licht. Dies sind spezifische Eigenschaften helical geordneter flüssigkristalliner Phasen. Die meisten Flüsssigkristalle bestehen aus langgestreckten stäbchen- oder scheibenförmigen Molekülen. Je nach Anordnung der Moleküle unterscheidet man zwischen z.B. nematischen, smektischen oder cholesterischen Flüssigkristallen. In nematischen Phasen bilden diese Moleküle eine Fernordnung aus: Die Moleküle zeigen im Mittel immer in die gleichen Richtung. Daher verhält sich eine nematische Phase wie ein optisch einachsiger Kristall.

Die cholesterische Phase ist das chirale Analogon der nematischen Phase. Bringt man ein chirales Molekül in eine nematische Wirtsphase, so baut sich eine helicale Überstruktur auf. In dieser helicalen Überstruktur ändern sich die Ausrichtungen der Moleküle von Schicht und Schicht um einen bestimmten Winkel und damit auch deren Brechungsindex. Nach einer bestimmten Zahl von Schichten wird dann die ursprüngliche Molekülausrichtung wieder erreicht. Die Dicke des Schichtaufbaus bis zur vollen Drehung nennt man Ganghöhe p der Helix. Durch die kontinuierliche Änderung des Brechungsindexes entstehen Interferenzeffekte, und es kommt zu der erwähnten winkelabhängigen, selektiven Reflexion.

Die Wellenlänge des reflektierten Lichtes ist um einen bestimmten Werte zentriert, der von der Ganghöhe und dem Brechungsindex abhängt. Sowohl Brechungsindex als auch Ganghöhe sind temperaturabhängig, was zu thermochromen Effekten führt. Will man das thermochrome Verhalten unterbinden, muß man die Änderung der Ganghöhe unterbinden. Dies geschieht durch eine Vernetzung sowohl der nematischen als auch der chiralen Komponenten. Typische nematische Flüssigkristalle sind beispielsweise Phenylbenzoate. Als chirale Phase kann beispielsweise ein Isosorbid dienen. Im Falle der Cholesterylester findet man in einem Molekül das Mesogen und das notwendige chirale Zentrum, um einen cholesterischen Flüssigkristall darzustellen.

Es gibt eine Vielzahl von Molekülen und deren Kombinationen, um aus nematischen und chiralen Komponenten cholesterische Flüssigkristalle (oder synonym dafür: Flüssigkristalle mit chiraler Phase) darzustellen, auf die hier nicht näher eingegangen werden kann. Dem Fachmann sind diese Kombinationen bekannt.

Im Rahmen der Erfindung sind besonders geeignet die Handelsprodukte Helicone® High Chroma-Pigmente, die ein Grundgerüst aus organischen Polymeren aufweisen, bestehend aus einer cholesterischen flüssigkristallinen Phase. Hiervon sind verschiedene Typen erhältlich, die folgende Farbwechsel zeigen: grün nach blau, tiefblau nach unsichtbar, kupferrot nach grün und gold nach grün. Innerhalb des sichtbaren Farbspektrums lassen sich alle Farbschattierungen einstellen, entweder durch Variation der Untergrundfarben, Abmischen verschiedener Helicone® High Chroma-Typen oder Formulierung von Helicone® High Chroma mit anderen Farbmitteln.

Die wünschenswerten Effekte werden insbesondere dann bei der Verwirklichung der vorliegenden Erfindung erzielt, wenn der Gehalt der flüssigkristallinen Effekt-Pigmente in der thermoplastischen Polymerschicht etwa 0,01 bis 0,9 Gew.-%, insbesondere 0,1 bis 0,5 Gew.-% beträgt. Wird der Wert von etwa 0,01 Gew.-% unterschritten, dann stellt sich nicht der wünschenswerte Farbeffekt ein. Ein Überschreiten des Wertes von etwa 0,9 Gew.-% führt zu keiner wesentlichen Steigerung des angestrebten Farbeffektes.

Unter flüssigkristallinen Effekt-Pigmenten gibt es auch solche, die, wie bereits eingangs zum Ausdruck gebracht, thermochrom sind. Diese spielen hier keine wesentliche Rolle. Deren Einbindung ist jedoch grundsätzlich nicht ausgeschlossen. Sie dürfen nur in einer solchen Menge eingesetzt werden, dass angrenzende Flächen, auf die unterschiedliche Temperatur einwirkt, nicht unterschiedlich farbig sind. Daher soll für die Erfindung die dominierende Größe, die mit den flüssigkristallinen Effekt-Pigmenten in Zusammenhang steht, der Lichteinfallswinkel sein.

Eine vorteilhafte Weiterbildung des erfindungsgemäßen Verbundgebildes besteht darin, dass unter der pigmentierten thermoplastischen Polymerschicht eine opak-pigmentierte Unterschicht bzw. Unterfolie angeordnet ist, deren Gehalt an üblichem Pigment vorzugsweise weniger als 10 Gew.-%, insbesondere weniger als etwa 5 Gew.-% beträgt. Aufgrund der Transparenz der Pigmente spielt die Farbe des Untergrundes, auf den die Schicht mit einbezogenem flüssigkristallinem Pigment aufgetragen wird, eine gewisse Rolle. So kann man auf dunklem, insbesondere schwarzem Untergrund eine bestimmte Farbe erkennen, die sich je nach Blickwinkel verändert. Mit einem weißen oder grauen Substrat erzielt man dagegen ein Funkeln mit ganz leichter Farbveränderung, da hier der Untergrund den größten Teil des Lichtes reflektiert.

Die transparente, polymere UV-Schicht kann vielfältige vorteilhafte Ausgestaltungen erfahren: So kann ihr ein UV-Stabilisator, insbesondere in Form von sterisch gehinderten Aminen, Benzophenonen und/oder Benzotriazolen einverleibt werden. Wenn, worauf nachfolgend noch eingegangen wird, eine Vernetzung des Materials in der Schicht in Betracht gezogen wird, dann müssen solche UV-Stabilisatoren herangezogen werden, die bei dieser Vernetzung nicht zerstört werden und zu keiner farblichen Veränderung des Materials führen. Vorzugsweise hat die transparente, polymere UV-Schicht eine Stärke von mindestens etwa 50 µm, insbesondere von mindestens etwa 100µm. Wird die Schichtstärke von etwa 50 µm unterschritten, dann stellt sich die wünschenswerte Schutzwirkung nicht in dem erforderlichen Maße ein. Zwar gilt grundsätzlich keine Oberbeschränkung. Wird der wünschenswerte Schutz bei einer bestimmten Stärke erreicht, dann gibt es keinen Sinn für eine weitere Anhebung. Die Stärke der pigmentierten, thermoplastischen Polymerschicht, die die flüssigkristallinen Effekt-Pigmente enthält, stellt keine kritische Größe dar. Hier wird der Fachmann die Stärke der Anforderung des jeweiligen Anwendungsfalls anpassen. Entsprechendes gilt zur Stärke der opak-pigmentierten Unterschicht bzw. Unterfolie.

Zur Steuerung der Eigenschaften der verschiedenen Schichten des erfindungsgemäßen Verbundgebildes können diesen noch übliche Zusatzmittel einverleibt werden, sofern durch deren Einverleibung die Anforderungen der Erfindung an die beiden angesprochenen Hauptschichten, d.h. an die pigmentierte thermoplastische Polymerschicht sowie an die transparente, polymere UV-Schutzschicht, weiterhin erfüllt werden. So können beispielsweise anorganische Materialien in diesen beiden Schichten im Allgemeinen nicht einverleibt werden, da sie beispielsweise die Transparenz stören würden.

Die erfindungsgemäß zu verwirklichende transparente, polymere UV-Schicht sowie die effekt-pigmentierte thermoplastische Polymerschicht beruhen auf polymeren Materialen. Hier unterliegt die Erfindung keinen wesentlichen Einschränkungen. Man kann problemlos diejenigen Materialien ermitteln, die das Erfindungsziel verwirklichen lassen und mit denen die kritischen Anforderungen der Erfindung erfüllt werden. Es ist bevorzugt, dass die transparente, polymere UV-Schicht auf Ethylen-Vinylacetat-, Ethylenacrylat- und/oder -methacrylat-Polymer, Polyvinylchlorid, Polyurethan und/oder transparentem Polyolefin, insbesondere Ethylen/Propylen-Copolymer, beruht. Im Rahmen der Erfindung wird es bevorzugt, dass die transparente, polymere UV-Schicht und/oder die pigmentierte, thermoplastische Polymerschicht auf olefinischen Polymeren beruht.

In Einzelfällen ist es bevorzugt, dass der Gelgehalt des Polymers durch teilweise Vernetzung, insbesondere durch die Einwirkung von elektronischen Strahlen auf das polymere Material, auf mindestens etwa 5 Gew.-%, insbesondere etwa 10 bis 80 Gew.-%, eingestellt wird. Hierdurch können die Eigenschaften der bestrahlten Polymerschicht innerhalb gewisser Grenzen gesteuert werden. Vorteilhaft wird dabei die Behandlung mit Elektronenstrahlen einer Strahlendosis von etwa 10 bis 500, insbesondere etwa 30 bis 300 kJ/m2 durchgeführt. Die Gelgehalte der vernetzten Polymere können beispielsweise nach der Extraktionsmethode bestimmt werden. Diese wird u.a. beschrieben in der EP 1 149 858 A1 (a.a.O. S. 5, Z. 46 - S. 6, Z. 16).

Ein besonders vorteilhaftes Verfahren zur Herstellung des erfindungsgemäßen Verbundgebildes besteht darin, dass die einzelnen Schichten in üblicher Weise extrudiert und/oder kalandriert und dann zu einem Verbundgebilde zusammengeführt werden. Gleichermaßen vorteilhaft ist es, das Verbundgebilde durch übliche Coextrusion herzustellen. Dieses Vorgehen ist dem Fachmann geläufig. In Einzelfällen ist es von Vorteil, wenn das erfindungsgemäße Verbundgebilde in seiner Form geändert wird. Dies kann beispielsweise durch Tiefziehen, Presskaschieren, Low-Pressure-Molding oder Injection-Molding geschehen. Auf diese Weise wird das zunächst erhaltene Verbundgebilde in eine andere Form überführt, wobei das Verbundgebilde auf einen Träger aufgebracht werden kann, so dass im Einzelfall eine gewünschte Formstabilisierung erreicht wird.

Zu den weiteren Schichten zählt beispielsweise eine auf die transparente, polymere UV-Schutzschicht aufgebrachte Schicht, die die Abriebbeständigkeit, insbesondere bei der Anwendung des erfindungsgemäßen Verbundgebildes zur Innenverkleidung von Kraftfahrzeugen, begünstigt. Das erfindungsgemäße Verbundgebilde lässt sich aber vielfältig verwenden, z.B. zur Verkleidung von beliebigen Substraten, Holz, Metall und Kunststoffen, so insbesondere zur Verkleidung von Haushaltsgegenständen, Sportgeräten, Textilien aber insbesondere auch zur Innenverkleidung von Fahrzeugen und hier insbesondere Kraftfahrzeugen.

Bei der Verwendung des erfindungsgemäßen Verbundgebildes zur Innenverkleidung von Fahrzeugen kommt insbesondere das Beschichten von Zierstäben als Tür-Insert-Materialien, das Beschichten von Bedienelementen, wie Multifunktionsscheidern und Bezugsstoffen, in Frage. Hier erfolgt eine vorteilhafte Nutzung der flüssigkristallinen Effekt-Pigmente im Hinblick auf den Designer-Effekt. Dabei werden die üblichen Anforderungen erfüllt, wie die wünschenswerte Licht- und thermische Beständigkeit. Weiterhin werden die notwendigen haptischen Eigenschaften eingehalten. Mit den angesprochenen Weiterbildungen, so beispielsweise durch das Vorsehen einer abriebbeständigen Deckschicht, wird auf die wünschenswerte Gebrauchstüchtigkeit abgestellt. Zwar könnte man daran denken, die im Außenbereich herangezogene Lackschicht mit einem Gehalt an flüssigkristallinen Effekt-Pigmenten heranzuziehen. Dies schließen jedoch ästhetische Gesichtspunkte aus. Auch zeigen derartige Materialien nicht die sich seit langem als erforderlich herausgestellten Oberflächenanforderungen, wie beispielsweise die wünschenswerte Haptik. Die angesprochenen Vorteile werden erfindungsgemäß insbesondere deswegen erreicht, weil die Eigenschaften weich/transparent/wärmestabil einer Schicht bzw. Folie in vollkommener Weise kombiniert sind. So sind transparente Schichten üblicherweise hart und wärmestabil oder weich und nicht wärmestabil.

Nachfolgend wird die Erfindung anhand von Beispielen, welche die erfindungsgemäße Lehre beschränken sollen, im einzelnen beschrieben. Dem Fachmann sind im Rahmen der vorliegenden Offenbarung weitere Ausführungsbeispiele offensichtlich.

### Beispiele:

In den Beispielen werden folgende Einsatzstoffe verwendet:

EVA: Ethylen - Vinylacetat - Copolymer; MFI = 0,7 g / 10 min. ( 190 °C, 2,16 kg ); Vinylacetatgehalt 9 Gew. %; Shorehärte D 42;

TPE-O: Enthaltend ca. 65 % eines Ethylen / Propylen Copolymeren, dessen Ethylengehalt ca. 70 Gew. % bestätigt, und ca. 35 Gew. % eines Propylen / Ethylen- Copolymeren, dessen Ethylengehalt ca. 3 Gew. % bestätigt; MFI 1,8 g /10 min ( 230 °C, 2,16 kg); Shorehärte D 35.

### Vergleichsbeispiel 1

In einem Trommelmischer werden nacheinander die Mischungen
a) enthaltend 99,5 Gew. % EVA und 0,5 % eines cholesterischen Flüssigkristallpigmentes, das einen Farbumschlag von rot nach grün aufweist, und
b) enthaltend 99 % Gew. % TPE-O und 1 % eines Pigmentrußes hergestellt. Anschließend wurde jede Mischung in einem Zweiwellenextruder bei 190 °C zu jeweils einer 0,5 mm dicken Flachfolie extrudiert. Beide Folien wurden anschließend bei 20 bar, 200 °C, 3 min lang zusammengepreßt, so dass eine zweilagige Folie erhalten wurde.

### Vergleichsbeispiel 2

Die unter Vergleichsbeispiel 1 erhaltene Folie a wurde vor dem Verpressen nach vorheriger Coronabehandlung mit einer ca. 10 µ dicken Polyurethanlackschicht, die 0,2 % eines Lichtschutzmittels auf Basis eines Benzoltriazols enthält, versehen. Die so erhaltene Folie c wurde bei 20 bar, 200 °C 3 min lang mit der Folie b verpresst, so dass eine zweilagige Folie erhalten wurde.

### Beispiel 1 (Erfindung)

Zu den im Vergleichsbeispiel 1 genannten Folie a und b wurde eine Folie d extrudiert, die 100 Gew. % des oben bezeichneten EVA enthält. Die Foliendicke beträgt 0,25 mm. Die Folie d wurde ebenfalls nach einer Coronierung mit einer 10 µm starken Polyurethanlackschicht versehen. Anschließend wurden die Folien, d, a und b in dieser Reihenfolge bei 20 bar und 200°C 3 min lang miteinander verpresst, so dass eine dreilagige Folienkonstruktion erhalten wurde.

Die Eigenschaften der bezeichneten Folien sind in der folgenden Tabelle zusammengefasst. Die Folien der Vergleichsbeispiele 1 und 2 zeigen nach der Exposition gegenüber UV- Licht gem. DIN 75202 bereits nach zwei Zyklen einen vollständigen Verlust des Farb- Flop- Effektes. Dagegen zeigt die Folie des Beispiels 1, dass durch die Gegenwart der oberen Folie der Farbflop noch nach 5 Zyklen erhalten bleibt.

**Tabelle**

| | Vergleichsbeispiel 1 | Vergleichsbeispiel 2 | Beispiel 1 |
|---|---|---|---|
| Lichtechtheit gem. DIN 75202 | unzureichend nach 2 Zyklen | unzureichend nach 2 Zyklen | 4* nach 5 Zyklen |
| Kondensat gem. DIN 75201-B | 0,3 | 0,3 | 0,4 |

| | | | |
|---|---|---|---|
| Anmerkung: * Bewertung nach rating gemäß DIN 75 202 (zufriedenstellend). | | | |

## Patentansprüche

1. Zwei- oder mehrlagiges Verbundgebilde, insbesondere Verbundfolie, mit einem Gehalt an Effekt-Pigmenten in mindestens einer der Schichten des Verbundgebildes, **dadurch gekennzeichnet, dass** das Verbundgebilde eine pigmentierte thermoplastische Polymerschicht, die flüssigkristalline Effekt-Pigmente enthält, und darauf eine transparente, polymere UV-Schutzschicht aufweist, wobei die UV-Schutzschicht nach DIN EN ISO 11333 einen MFI-Wert (190°C, 2,16 kg) von weniger als 7g/min, das Verbundgebilde eine Lichtechtheit nach DIN 75 202 nach 5 Zyklen nach Stufe 3 oder höher und ein Fogging nach DIN 75 201 B von weniger als 1,0 mg und die einzelnen Schichten des Verbundgebildes eine Shore-Härte D nach DIN 53 505 von weniger als 45 aufweisen.

2. Verbundgebilde nach Anspruch 1, **dadurch gekennzeichnet, dass** die Lichtechtheit nach DIN 75 202 nach 5 Zyklen nach Stufe 4 oder höher bewertet wird.

3. Verbundgebilde nach Anspruch 1 oder 2, **dadurch gekennzeichnet, dass** das Fogging nach DIN 75 201 B weniger als 0,7 mg, insbesondere weniger als 0,5 mg beträgt.

4. Verbundgebilde nach einem der Ansprüche 1 bis 3, **dadurch gekennzeichnet, dass** die Shore-Härte D nach DIN 53 505 der einzelnen Schichten kleiner als 40, insbesondere kleiner als 37 ist.

5. Verbundgebilde nach einem der Ansprüche 1 bis 4, **dadurch gekennzeichnet, dass** die transparente, polymere UV-Schutzschicht nach DIN EN ISO 11333 einen MFI-Wert (190°C, 2,16 kg) von weniger als 5 g/10 min, insbesondere weniger als 1 g/10 min, aufweist.

6. Verbundgebilde nach mindestens einem der Ansprüche 1 bis 5, **dadurch gekennzeichnet, dass** das flüssigkristalline Effekt-Pigment in Form eines cholesterischen flüssigkristallinen Pigments vorliegt.

7. Verbundgebilde nach mindestens einem der vorangehenden Ansprüche, **dadurch gekennzeichnet, dass** unter der pigmentierten thermoplastischen Polymerschicht eine opak-pigmentierte, insbesondere dunkel-pigmentierte polymere Unterschicht, insbesondere Unterfolie, angeordnet ist.

8. Verbundgebilde nach Anspruch 7, **dadurch gekennzeichnet, dass** der Gehalt der opak-pigmentierten, polymeren Unterschicht an Pigment weniger als etwa 10 Gew.-%, insbesondere weniger als etwa 5 Gew.-% beträgt.

9. Verbundgebilde nach mindestens einem der vorangehenden Ansprüche, **dadurch gekennzeichnet, dass** die flüssigkristallinen Effekt-Pigmente in der pigmentierten, thermoplastischen Polymerschicht in einer Menge von etwa 0,01 bis 0,9 Gew.-%, insbesondere etwa 0,01 bis 0,5 Gew.-% vorliegen.

10. Verbundgebilde nach mindestens einem der vorangehenden Ansprüche, **dadurch gekennzeichnet, dass** die transparente, polymere UV-Schutzschicht einen UV-Stabilisator enthält.

11. Verbundgebilde nach Anspruch 10, **dadurch gekennzeichnet, dass** der UV-Stabilisator in Form von sterisch gehinderten Aminen, Benzophenonen und/oder Benzotriazolen vorliegt.

12. Verbundgebilde nach mindestens einem der vorangehenden Ansprüche **dadurch gekennzeichnet, dass** in den verschiedenen Schichten des Verbundgebildes übliche Zusatzmittel in Form von Füllstoffen, Flammschutzmitteln und/oder Gleitmitteln enthalten sind.

13. Verbundgebilde nach mindestens einem der vorangehenden Ansprüche, **dadurch gekennzeichnet, dass** die transparente, polymere UV-Schutzschicht mindestens etwa 50 µm, insbesondere mindestens etwa 100 µm stark ist.

14. Verbundgebilde nach mindestens einem der vorangehenden Ansprüche, **dadurch gekennzeichnet, dass** die transparente, polymere UV-Schicht auf einem Ethylen-Vinylacetat-Polymer, Ethylenacrylat- und/oder -methacrylat-Polymer, Polyvinylchlorid und/oder Polyurethan beruht.

15. Verbundgebilde nach mindestens einem der vorangehenden Ansprüche, **dadurch gekennzeichnet, dass** die transparente, polymere UV-Schutzschicht und/oder die pigmentierte thermoplastische Polymerschicht auf olefinischen Polymeren beruht, worin der Gelgehalt des thermoplastischen polymeren Materials durch teilweise Vernetzung, insbesondere durch Elektronenstrahlen, auf mindestens etwa 5 Gew.-%, insbesondere auf etwa 10 bis 80 Gew.-%, eingestellt ist.

16. Verfahren zur Herstellung eines Verbundgebildes nach mindestens einem der vorangehenden Ansprüche, **dadurch gekennzeichnet, dass** die einzelnen Schichten des Verbundgebildes in üblicher Weise extrudiert und/oder kalandriert und zu dem Verbundgebilde zusammengeführt oder durch Coextrusion erhalten werden.

17. Verfahren nach Anspruch 16, **dadurch gekennzeichnet, dass** das erhaltene Verbundgebilde durch Tiefziehen, Presskaschieren, Low-Pressure-Molding oder Injection-Molding in eine andere Form überführt wird, gegebenenfalls mit zusätzlichen weiteren Schichten.

18. Verwendung des Verbundgebildes nach mindestens einem der vorangehenden Ansprüche 1 bis 15 zur Innenverkleidung von Fahrzeugen, insbesondere Kraftfahrzeugen.

19. Verwendung nach Anspruch 18 zum Beschichten von Zierstäben als Tür-Insert-Material, zum Beschichten von Bedienelementen, insbesondere Multifunktionsschaltern und von Bezugsstoffen.
